(19) Europäisches Patentamt / European Patent Office / Office européen des brevets

(11) **EP 3 939 685 A1**

(12) **EUROPEAN PATENT APPLICATION**

(43) Date of publication:
**19.01.2022 Bulletin 2022/03**

(21) Application number: **20305805.2**

(22) Date of filing: **15.07.2020**

(51) International Patent Classification (IPC):
**B01D 45/08** *(2006.01)*  **B01D 45/12** *(2006.01)*
**B04C 5/04** *(2006.01)*

(52) Cooperative Patent Classification (CPC):
**B01D 45/08; B01D 45/12; B04C 5/00; B04C 5/04; B04C 9/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **TOTAL RAFFINAGE CHIMIE**
 **92400 Courbevoie (FR)**

• **IFP Energies nouvelles**
 **92500 Rueil-Malmaison (FR)**

(72) Inventors:
• **AMBLARD, Benjamin**
 **92852 Rueil-Malmaison (FR)**
• **YAZDANPANAH, Mahdi**
 **76600 Le Havre (FR)**

(74) Representative: **Fédit-Loriot**
 **22, rue du Général Foy**
 **75008 Paris (FR)**

(54) **PARTICLES SEPARATION DEVICE FOR SEPARATING PARTICLES FROM A FLOWING GAS**

(57) The invention concerns a particle separation device (2) for separating particles from a flowing gas, intended to be placed in face of an inlet opening (31) of a cyclonic separator (3) to reduce the quantity of particles entering inside the cyclonic separator and improving its overall separation capacity. The particle separation device (2) comprises at least one supporting element (4) supporting a set of impact blades (21). Each impact blade extends in a vertical direction when the particle separation device is in a use position, between two planes perpendicular to the vertical direction. Each impact blade also defines an impact surface for particles circulating with the gas in a circulation direction perpendicular to the vertical direction. Said impact surface of an impact blade has a concave cross section in a plane perpendicular to the vertical direction, over the whole length of the impact blade along the vertical direction.

Fig.1

EP 3 939 685 A1

**Description**

**Background**

Fluid catalytic cracking (FCC) units usually comprise a regenerator in which the catalytic particles are regenerated. The regeneration process generates combustion gases that generally contain catalytic particles. Before exiting the regenerator, these catalytic particles entrained with combustion gases are separated from the combustion gases by one or several stages of cyclonic separators arranged inside the regenerator enclosure. When capacity of the regenerator increases, such cyclonic separators may not be sufficient anymore for separating efficiently the catalytic particles. This is particularly the case when retrofitting of FCC units is envisaged to increase capacity. In such a case, it is generally not possible to add cyclonic separators as the room inside the regenerator enclosure is limited. Similar problems are raised in enclosures in which a fluidized bed is circulating, such as in a methanol to olefin unit, a naphtha catalytic cracking unit, a pyrolytic unit, in particular for pyrolysis of biomass, a chemical looping combustion unit.
There is therefore a need for improving separation of particles in enclosures in which a fluidized bed is circulating, in particular with a compact device.

**Summary**

The present invention relates to a particle separation system for separating particles from a flowing gas including a particle separation device up stream of a cyclonic separator. The particle separation device is placed in front of or in the inlet opening of the cyclonic separator. In particular, the particle separation device of the particle separation system of the invention allows separating particles based on impact separation method of the latter on impact blades.
The particle separation device of the particle separation system according to the invention permits to reduce the quantity of particles entering the cyclonic separator, thus reducing its loading which is particularly useful in case of retrofitted units with increased capacity.
In some embodiments, the novel particle separation device of the particle separation system has a particularly compact design with reduced height.
The particle separation device may advantageously be designed in a way to obtain a low pressure drop of the gas flow entering the cyclonic separator. The main reason is to avoid increasing the overall pressure drop of the unit resulting in the additional pressure head buildup requirement in the air compressor which may be beyond the available unit capacity. The pressure drop may be minimized in the design by selection of the form of blades, the number of the rows and number of blades in each row, the form of the casing when present and its overall size, and gas velocity which is a function of the overall opening (free space) in the particle separation device for gas - solid mixture flow.
The novel particle separation device of the particle separation system may be in form of kits, easy to install in a plug and play format.

**Detailed description**

According to a first aspect, a particle separation system for separating particles from a gas-particles flow, including a cyclonic separator comprising an inlet opening for the gas charged with particles circulating along a circulation direction perpendicular to a vertical direction when the cyclonic separator is in a use position, and a particle separation device placed in front of or in the inlet opening of the cyclonic separator, the particle separation device comprising:

- at least one supporting element,
- a set of impact blades supported by said at least one supporting element,

and where,

- each impact blade extends in the vertical direction,
- each impact blade defines an impact surface for particles circulating with the gas in the circulation direction,
- each impact surface of an impact blade has a concave cross section in a plane perpendicular to the vertical direction, over the whole length of the impact blade along the vertical direction.

Such arrangement is simple and easy to make and install. Upon impact of the gas charged with particles on the impact blades, particles are stopped by the impact blades and fall below the particle separation device before the gas entry into the cyclonic separator. The quantity of particles entering the cyclonic separator is therefore greatly reduced, improving the particle separation of the cyclonic separator.
Advantageously, impact blades may be spaced from each other, in particular in the circulation direction and/or perpendicularly to the circulation direction, and/or perforated to allow the flow of gas to pass between or trough them.

In one embodiment, the impact surface of at least one impact blade may be perforated for less pressure drop. It may be noted that perforated impact blades may not need to be spaced from each other to let the gas flowing.

In one embodiment, at least one row of at least one impact blade may be provided. Such arrangement may improve the separation of particles with low additional pressure drop due to a reduced space.

Optionally, each row of at least one impact blade may be spaced from an adjacent row in the circulation direction, for example by a predetermined distance. Several rows may be separated by the same distance.

Optionally, at least one row may present at least two impact blades and impact blades of a same row are arranged, seen in a top view in the vertical direction, in a configuration chosen from a linear configuration perpendicular to the circulation direction and a V-configuration the concavity of which is directed in the circulation direction. In particular, when the V-configuration is chosen, a single row may be sufficient. A very compact device is then obtained.

Advantageously, the impact blades may be configured, i.e. spaced and/or perforated, such that the ratio of a free passage surface and a cyclonic opening surface is set from 0.2 to 5, preferably from 0.5 to 2, where the free passage surface is the surface measured in a plane perpendicular to the circulation direction through which the particles gas flow can flow between and/or through one row of impact blades, in particular for each row of impact blades, and the cyclonic opening surface is the surface of the inlet opening of the cyclonic separator measured in a plane perpendicular to the circulation direction.

In one embodiment, projected surfaces, obtained by projection of the impact blades in the circulation direction on a vertical plane perpendicular to the circulation direction, may cover at least 80% of the surface of the inlet opening of the cyclonic separator (3).

In another embodiment, the whole surface of the inlet opening of the cyclonic surface may be covered. In such a case, these projected surfaces cover each other without free space. Thus, a gas - solid flow circulating through the particle separation device in the circulation direction is obliged to impact each impact blade before entering the cyclonic separator.

In one embodiment, the concave cross section of each impact surface of an impact blade may be chosen among a U cross section, a flared U cross section, a curved cross section, a V cross section. These designs are advantageously simple to make and efficient.

In one embodiment, at least one impact blade may present on opposite ends of its convex side two deflecting walls forming with a vertical plane containing the circulation direction an angle beta from 0° to 45° away from each other. In other words, such impact blades then present in a top view in the vertical direction a form similar to a lying H form (the wings of the H form extend substantially in the circulation direction). Such deflecting walls may direct the flow of gas after its impact on the impact blade in a direction downstream the impact blade with respect to the circulation direction. This may be particularly advantageous when impact blades are arranged downstream the impact blades provided with the deflecting walls, by possibly directing the flow of gas towards these downstream impact blades. Optionally, these deflecting walls extend over the whole height of the impact blade measured vertically for better separation efficiency.

In one embodiment, each impact blade has a width W and a depth D measured perpendicularly to the vertical direction in perpendicular directions, and the ratio D/W may be from 0.02 to 2, preferably from 0.05 to 0.5.

In one embodiment, the particle separation device may further comprise, upstream from the impact blades with respect to the circulation direction, at least one deflecting blade defining at least one vertical surface inclined towards the impact blades with respect to a vertical plane containing the circulation direction, optionally chosen among a blade having one vertical plane surface forming with a vertical plane containing the circulation direction an angle of 0° to 45°, a blade having two vertical plane surfaces arranged in a V-configuration, the concavity of which is directed towards the impact blades, each vertical plane surface forming with a vertical plane containing the circulation direction an angle of 0° to 45°. Such deflecting blades may direct more efficiently an arriving flow of gas towards the set of impact blades, thus improving separation efficiency.

In one embodiment, the particle separation system may further comprise at least one particle collecting element placed below the set of impact blades of the particle separation device in the vertical direction to collect the particles falling by gravity along the impact surface of the impact blades, said particles collecting element being inclined with respect to a plane perpendicular to the vertical direction in a direction away from the impact blades in the circulation direction. Such arrangement eases the evacuation of particles separated before entry of the gas flow inside the cyclonic separator. Optionally a lower end of said particle collecting element may be provided with a valve, for example closing a space between said lower end and lower ends of the set of impact blades. Such valve may avoid recirculation of the particles with the flowing gas. In particular, said particles collecting element may be chosen from a plate and a concave element the concavity of which is directed towards the impact blades.

Whatever the embodiment, each impact blade of the particle separation device may have an upper end connected to the at least one supporting element.

In one embodiment, said at least one supporting element may be chosen among a bar, a beam, a plate, advantageously connected to at least an upper end of one or several impact blades, and a casing defining a housing for the set of impact blades and optionally the at least one deflecting blade, said casing having an entry and an exit on opposite sides in the circulation direction.

In the embodiment in which the at least one supporting element is a bar, a beam or a plate, the particle separating device may then be particularly compact and light and may be fixed directly to a surrounding structure such as the cyclonic separator or an enclosure internal wall in which the particle separation system is placed.

In the embodiment in which the at least one supporting element is a casing, said casing may present one or several of the following features:

- A constant cross section in a plane perpendicular to the circulation direction,
- A flow guiding part connected to its entry, said flow guiding part widening in a direction away from the casing,
- Below the set of impact blades, a lower wall inclined with respect to a plane perpendicular to the vertical direction in a direction away from the set of impact blades, from the entry of the casing towards its exit.

For easier making, this casing may form the inlet opening of the cyclonic separator. In other words, the particle separation device may be installed inside a conduit of the cyclonic separator forming the inlet opening of the latter.

In one embodiment, all the impact blades of the set of impact blades may be identical, optionally with different orientations with respect with the circulation direction and the vertical direction.

According to a second aspect, an enclosure for a circulating fluidized bed unit is provided, said enclosure extending vertically and comprising on its inside a particle separation system according to the invention

The enclosure may comprise several other cyclonic separators, in particular in series, placed downstream of the cyclonic separator of the particle separation system.

In one embodiment, the particle separation device may be fixed directly to the cyclonic separator of the particle separation system.

In another embodiment, the particle separation device may be fixed directly to internal walls of the enclosure, in particular close to the top of the enclosure, in which the particle separation system is installed.

It may be noted that the particle separation device may be fixed directly to both the cyclonic separator of the particle separation system and internal wall(s) of the enclosure.

The enclosure may be chosen among a regenerator enclosure of a fluid cracking unit, a methanol to olefin unit, naphtha catalytic cracking unit, a pyrolytic unit, in particular for pyrolysis of biomass, a chemical looping combustion unit.

## Description of the drawings

The invention is illustrated by help of an example showing a potential embodiment of the invention.

Figure 1 represents schematically a side view of an enclosure equipped with a particle separation system according to one embodiment of the invention including a cyclone and a particle separating device,

Figure 2 represents schematically a top view of the cyclone and the particle separating device of figure 1,

Figure 3 represents schematically several embodiments (a) to (g) of impact blades represented in cross section,

Figure 4 represents schematically cross sections of impact blades arranged in rows according to one embodiment of the invention,

Figure 5 represents schematically cross sections of impact blades arranged in rows according to several embodiments (a), (b), (c) of the invention,

Figures 6(a) and 6(b) represent schematically respectively a side view and a top view of a particles separating device according to one embodiment of the invention,

Figure 7 represents schematically two embodiments (a), (b) of deflecting blades view in cross section,

Figure 8 represents schematically a side view of a particle separating device according to one embodiment of the invention,

Figure 9 represents schematically a perspective view of an impact blade of the embodiment of figure 8,

Figure 10 (a) and 10 (b) represent schematically respectively a side view and a top view of a particle separation system including a cyclone and a particle separating device according to one embodiment of the invention,

Figure 11 represents schematically a top view of a particle separation system including a cyclone and a particle separating device according to one embodiment of the invention.

On the figures, X, Y, Z represents the axis of an orthonormal coordinate system where Z is the vertical direction corresponding to the gravity direction, and X, Y define a horizontal plane.

The terms "upper"/"top" and "lower"/"bottom" refer to the vertical direction when the particle separation device and the particle separation system are in use position inside an enclosure, the flow of gas and particles entering in the particle separation system along a circulation direction perpendicular to the vertical direction. For easier description, this circulation direction extends in the Y axis on the figures.

In the following description, same references are used to design same or similar elements, eventually with a prime added to the reference.

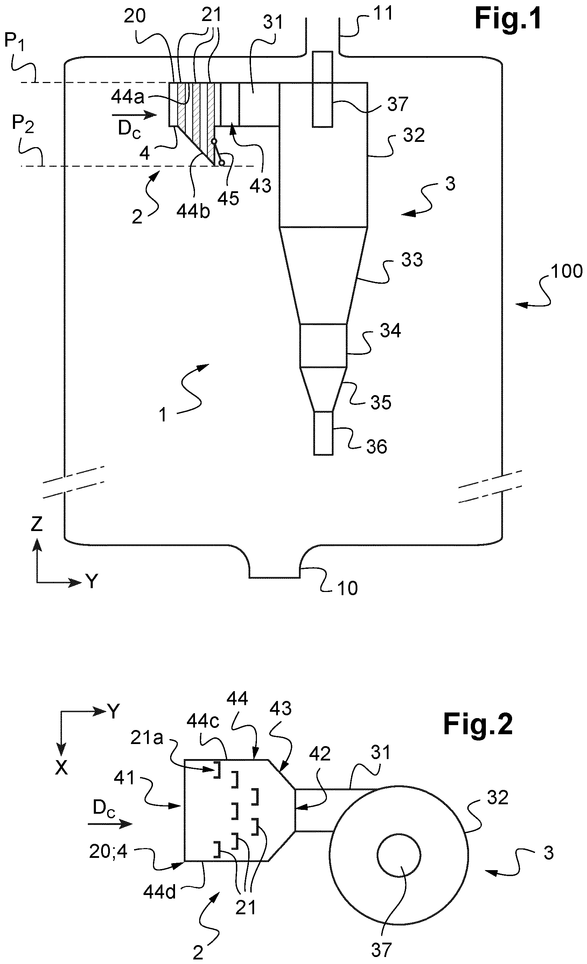

Figure 1 represents a part of an enclosure 100 equipped with a particle separation system 1 including a particle separation device 2 and a cyclonic separator 3, both being designed for separating particles from a flowing gas. The particle separation system 1 is placed inside the enclosure 100. For clarity sake, the proportions between the enclosure 100 on one side and the particle separation system 1 on the other side are not respected in figure 1.

Usually, such enclosure 100 has a general cylindrical shape, the longitudinal axis of which extends vertically. This enclosure is equipped with an inlet 10 at its bottom and an outlet 11 at its top.

In a usual way, the cyclonic separator 3, also named "cyclone", comprises an inlet opening 31 for a mixture of gas and solid particles (here particles of catalyst), and the body of the cyclone properly speaking 32, of essentially cylindrical shape, joined to a lower part 33, of conical shape splayed towards the top. This conical part 33 opens into a dust pot 34, also of essentially cylindrical shape, itself joined to a lower part 35, of conical shape splayed towards the top. This second conical part is joined to a lower part 36 (dipleg), essentially cylindrical, which makes it possible to recover the solid particles. The body of the cyclone 32 contains an outlet tube 37 through which the separated gases are discharged, in the upper part. The operating principle of the cyclone is that the mixture of particles and gas, arriving at high speed via the inlet opening 31, starts a very rapid rotating motion in the body of the cyclone 32, said motion extending as far as the parts 33-36. Two vortices are thus created in the cyclone, one rising of low density corresponding to the gas and another descending of higher density corresponding to the particles. These particles then fall into the leg 36, while the gases emerge via the outlet tube 37. In the use position represented figure 1, the longitudinal axis of the different parts 32-36 of the cyclone 3 also extends vertically. The superficial gas velocity at the inlet opening 31 is usually between 5 and 40 m/s, preferably between 10 and 30 m/s and most preferably between 15 and 25 m/s.

In the example, only the cyclone 3 which is part of the particle separation system is represented the outlet tube 37 of which is connected to the outlet 11 of the enclosure 100. However, several further cyclones (not represented) may be provided inside the enclosure 100. Such supplementary cyclones, similar to the cyclone of the particle separation system, are then mounted in series with the latter, the outlet tube of a cyclone being connected to the inlet opening of the following cyclone, the outlet tube of the last cyclone being connected to the outlet 11 of the enclosure 100.

The particle separation device 2 is placed in front of the inlet opening 31 of cyclone 3. In this embodiment, the particle separation device 2 is connected to the cyclonic separator 3. The arrow represents the circulation direction Dc of the mixture of gas and particles entering the particle separation device 2 and the cyclone 3. This circulation direction Dc is perpendicular to the vertical direction Z, usually in a horizontal plane.

The particle separation device 2 of figures 1 and 2 comprises one supporting element 20 and a set of impact blades 21 supported by the supporting element 20. The operating principle of the particle separation device 2 is that the mixture of particles and gas arriving on the set of impact blades 21 impact these blades inducing a reduction of the speed of the particles and their fall by gravity along the impact blades 21.

Each impact blade 21 extends in a vertical direction when the particle separation device 2 is in the use position as represented figure 1. These impact blades 21 extend between two planes P1, P2 perpendicular to this vertical direction. These planes are represented by dotted lines in figure 1.

Each impact blade 21 also defines an impact surface 21a for particles circulating with the gas in the circulation direction Dc. Moreover, each impact surface 21a of an impact blade has a concave cross section in a plane perpendicular to the vertical direction, over the whole length of the impact blade along the vertical direction. Such form may favor separation of the particles from the gas, by limiting the re-entrainment of particles by the gas after having impacted the blade, and guide the particles downwards. A gas flow with a reduced loading of particles thus enters the cyclone 3.

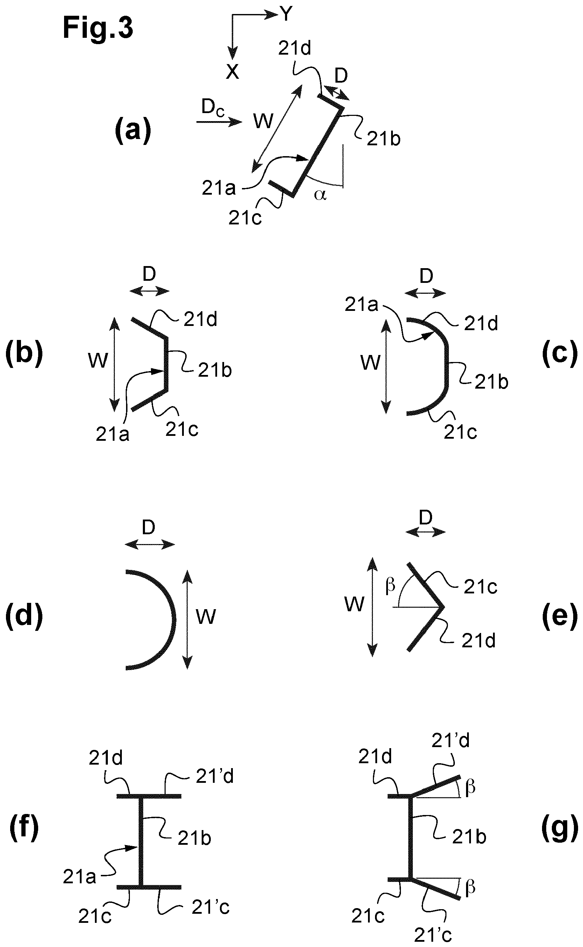

The impact blades 21 may present different designs. Some examples are shown figure 3 (a) to (g), but any other design may be envisaged provided each impact surface of an impact blade has the above defined concave form over its whole height (measured in the vertical direction).

The form of the horizontal cross section of the impact surface is for example a U cross section (fig.3(a)), a U cross section flared in a direction opposite the impact surface (fig. 3(b)), a curved cross section with a segment part (fig.

3(c), an angle arc, in particular an hemi circle (fig. 3d), a V cross section (fig. 3(e)). In the embodiments of figures 3(a), 3(b), 3(c), the impact blades thus present a back wall 21b and two lateral walls 21c, 21d at opposite ends of the back wall 21b. In the embodiment of figure 3(d), the impact blade 21 is defined by a single curved wall. In the embodiment of figure 3(e), the impact blade is defined by two lateral walls 21c, 21d, inclined by an angle beta with respect to the circulation direction Dc.

Preferably, as represented, each impact blade has a symmetry vertical plane, which may ease its making.

Whatever the form of its horizontal cross section, an impact blade 21 can be defined by its width W and its depth D measured in a horizontal plane as shown figures 3(a)-3(e). The width W here correspond to largest dimension of a blade in a horizontal plane, the depth D corresponding to the dimension in a direction perpendicular to the width in the same horizontal plane. Preferably, a blade may present the same horizontal cross section along its whole height (measured vertically).

To limit re-entrainment, the ratio D/W may preferably be from 0.02 to 2, preferably from 0.05 to 0.5, or within any range defined by two of these limits.

Holes traversing the impact blades may also be provided for gas to flow through them. This may reduce the pressure drop. Such holes may be of circular form or not. For example, these holes may represent up to 10% of the whole impact surface of an impact blade. Preferably, their diameter is from 1 mm to 20 mm and preferably from 5 mm to 10 mm, or within any range defined by two of these limits.

An impact blade 21 can also be defined by the angle alpha formed between the impact surface and a vertical plane perpendicular to the circulation direction, in particular when the impact surface has a plane part as in the embodiments of figures 3(a) to 3(c). More generally, when an impact blade presents a vertical symmetry plane, this angle alpha corresponds to the angle formed between the vertical symmetry plane and a vertical plane containing the circulation direction. Such angle is preferably less than 90°, in particular less than 80°, most preferably less than 60°. Such angle alpha is for example from 0 to 45°.

In the embodiments of figures 3(f), 3(g), the impact blades 21 further present on opposite ends on their convex side two deflecting walls 21'b, 21'c forming with a vertical plane containing the circulation direction an angle beta from 0° to 45° away from each other. Such deflecting walls 21'b, 21'c here extend from the lateral walls 21b, 21c respectively of the impact blades, at their intersection with the back wall 21b of the impact blade. Such designs of impact blades are preferably placed in a first row to deflect particles towards the impact blade(s) of a following row of impact blades, placed downstream with respect to the circulation direction Dc. Preferably, the impact blades provided with the deflecting wall also present a vertical symmetry plane, as in the examples.

The set of impact blades may be arranged in different ways.

As shown in the top view of figure 2, the impact blades 21 are arranged in three rows, a first row and a last row of two blades each and a middle row of three blades. In a same row, impact blades 21 extend side by side along a direction perpendicular to the vertical direction Z and the circulation direction Dc. In other words, the impact blades are arranged in a linear configuration perpendicular to the circulation Direction Dc. Here, each row is spaced from an adjacent row in the circulation direction, substantially by a same distance.

As seen in this top view of figure 2, the projected surfaces obtained by projection in the direction of the circulation direction of the impact blades in a vertical plan perpendicular to the circulation direction Dc, cover each other without free space. In other words, the mixture of gas and particles arriving on the set of impact blades in the direction of the circulation direction Dc is obliged to impact the impact blades 21 to arrive at the inlet opening 31 of cyclone 3, which improves the separation of particles by the particle separation device 2 of the invention. Preferably, the total surface of the projected surfaces is at least equal to the surface of the cross section (in a plane perpendicular to the circulation direction) of the inlet opening 31 of the cyclone 3.

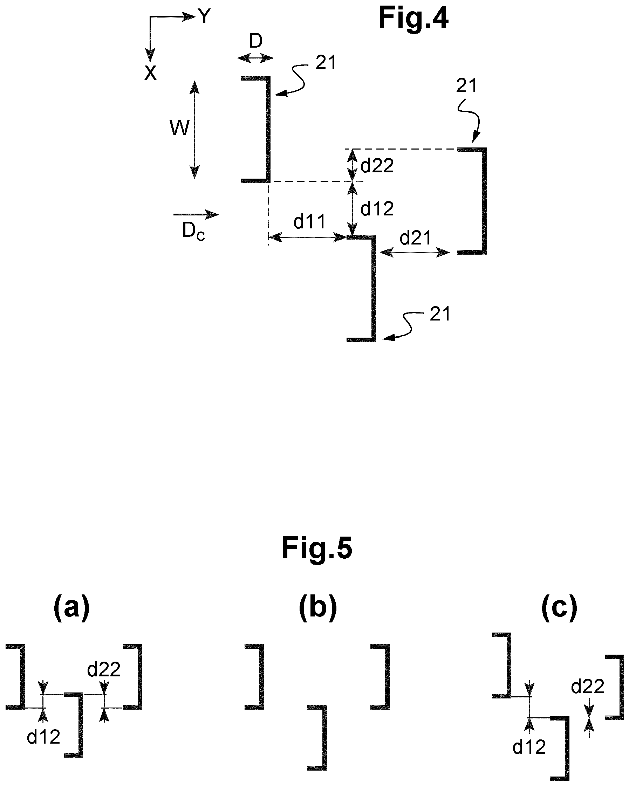

In the example of figure 4, the set of impact blades 21 is arranged in three rows, each row comprising a single impact blade, here of the form represented fig. 3(a), with an alpha angle of 0°. On figure 4 are defined distances d11, d21 between blades of two consecutive rows in the circulation direction, and distances d12 and d22 in the horizontal plane between the edges of blades from one row with respect to the nearest edge of the blade of the following row in the circulation direction. Distances d12 and d22 can be positive (no recovery of the projected surfaces of the blades of two consecutive rows on a plane perpendicular to the circulation direction), null or negative (recovery of the projected surfaces of the blades of two consecutive rows on a plane perpendicular to the circulation direction). Figure 5 illustrates 3 possible designs 5(a), 5(b), 5(c) based on the above mentioned spaces. In design of figure 5(A), both d12 and d22 are negative, in design of fig. 5(B), d12 and d22 are null, in design of fig. 5(B) d12 is positive, d22 is negative. Selection of these designs depends on the application, available space, and required separation efficiency and pressure drop limitations and may be chosen on the basis of simulations.

The invention is not limited by the number of rows and the number of impact blades per row. These numbers may vary depending on the size available inside the regenerator enclosure in front of the inlet opening 31 of cyclone 3 and/or on the size of the inlet opening of the cyclone 3. Generally, the number of rows may be from 1 to 10, preferably from 2 to 4. The number of blades per row may be from 1 to 15, preferably from 2 to 6. The distance between two consecutive (or adjacent) rows (designed by d11 and d21 in fig.4) may be from 0.5 to 10 W, preferably from 1 to 5W, where W is the width of an impact blade as defined above.

In the example of figure 1, the supporting element is a casing 4 surrounding the impact blades 21 and defining a housing for the set of impact blades 21. Referring to figure 2, this casing has an entry 41 and an exit 42 on opposite sides in the circulation direction. In the example shown in figures 1 and 2, the casing has a connection part 43 for connecting the exit 42 to the inlet opening 31 of the cyclone 3. This connection part 43 is here tapered in top view, widening from the exit 42 to the entry 41 (fig. 2) whereas in side view (in a plane perpendicular to the circulation direction), this connection part 43 has a constant section (fig.1). The casing has a body part 44 having an upper plane wall 44a perpendicular to the vertical plane, and an opposite lower wall 44b inclined in a direction away from the set of impact blades, from the entry of the casing towards its exit. The inclination of the lower wall 44b with respect to a horizontal plane is for example from 30 to 90° and preferably from 45 to 60°. These upper and lower walls are joined by lateral walls 44c, 44d (fig.2). The impact blades 21 extend over the whole height of the casing in the vertical direction (fig. 1). The impact blades are fixed at least to the upper wall 44a and optionally also to the bottom wall 44b with a horizontal opening along the bottom wall 44b for allowing the particles to flow along the lower wall 44b.

The casing 4 is not closed between the lower end of the inclined wall 44b and the connecting part 43 to allow particles to fall outside of the casing downstream in the enclosure. In the embodiment represented, a valve 45 is arranged for closing this opening to limit entry of gas on this side, the valve 45 opening regularly to discharge the separated particles from the casing. Such opening can be automatic, for example set off by accumulation of particles against the valve 45 inside the casing. Such valve 45 is commonly known as flapper valve, trickle valve or counterweighted plates.

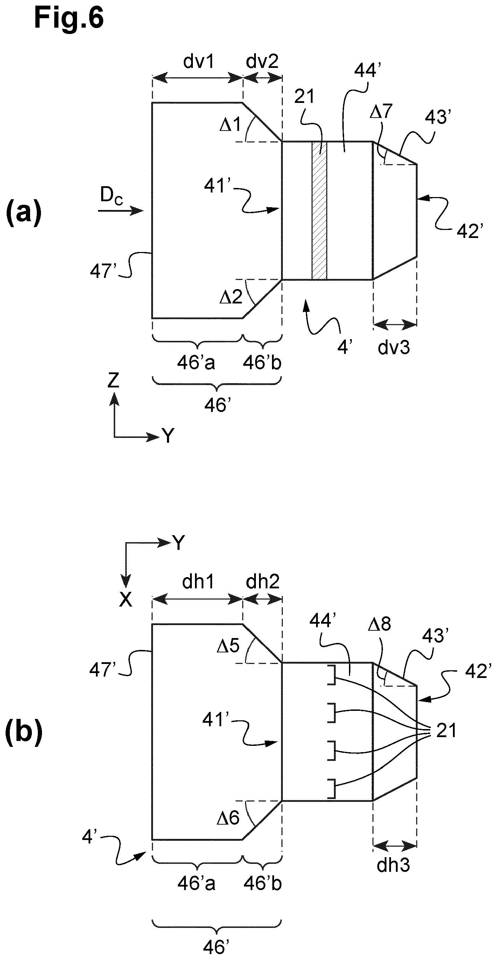

Another example of casing is represented in side view and top view on figures 6(a) and 6(b) respectively. The represented casing 4' has a similar connecting part 43' than the previous described embodiment. In this example the body part 44' of the casing has a tapered cross section in side view and top view. In addition, the casing 4' has a flow guiding part 46' connected to its entry 41'. The function of this flow guiding part 46' is to guide the gas-particles flow towards the body 44' of the casing containing the set of impact blades. The flow guiding part 46' is here made of a first portion 46'a of constant cross section and a second portion 46'b connected to the body part 44' and widening from the body part 44' to the first portion 46'a. The flowing gas enters the flow guiding part 46' via its entry 47', and then enters the body part 44' via its entry 41' and exits the connecting part 43' via the exit 42'.

This flow guiding part 46' can be made only of the first portion 46'a, only of the second portion 46'b, or of both first and second portions as represented in figures 6(a), 6(b). The choice of the design of this flow guiding portion will depend on the available space in the regenerator.

We define:

- dh1: the dimension of the first portion 46'a of the flow guiding part in the circulation direction in a horizontal plane (top view)
- dv1: the dimension of the first portion 46'a of the flow guiding part in the circulation direction in a vertical plane (side view)
- dh2: the dimension of the second portion 46'b of the flow guiding part in the circulation direction in a horizontal plane (top view)
- dv2: the dimension of the second portion 46'b of the flow guiding part in the circulation direction in a vertical plane (side view)
- dh3: the dimension of the connecting part 43' in the circulation direction in a horizontal plane (top view)
- dv3: the dimension of the connecting part 43' in the circulation direction in a vertical plane (side view)
- Δ1 (delta 1) and Δ2 (delta 2): the angles formed between the second portion 46'b of the flow guiding part and the body part 44' of the casing in cross section in a vertical plane containing the circulation direction (side view)
- Δ5 (delta 5) and Δ6 (delta 6): the angles formed between the second portion 46'b of the flow guiding part and the body part 44' of the casing in cross section in a plane perpendicular to the vertical direction (top view)
- Δ7 (delta 7): the angle formed between the connecting part 43' and the body part 44' of the casing in cross section in a vertical plane containing the circulation direction (side view)
- Δ8 (delta 8): the angle formed between the connecting part 43' and the body part 44' of the casing in cross section in a plane perpendicular to the vertical direction (top view).

Delta 1 and delta 2 can each be in a range of 0° to 90°, preferably 15° to 60°. Delta 5, delta 6, delta 7 and delta 8 can each be in a range from 0° to 90°, preferably from 15° to 45°. Advantageously, for easier construction and reduced costs, delta 5=delta 6 and/or delta 7 = delta 8.

dh1 and dv1 can each be from 0 to 10 times the depth D of a blade, as defined above. Advantageously, dh1 and dv1 have the same value.

Dimensions of dh2, dv2, dv3 and dh3 will depend from the delta angles and the surface area (in a plane perpendicular of the circulation direction) of the entries 47', 41', and exit 42'. Advantageously, for easier construction and reduced costs, dh2= dv2 and/or dv3= dh3.

It may be noted that casing walls may have an angle with the circulation direction between 0 and 45.

The particle separation device 2 may also include at least one deflecting blade 5 defining at least one vertical surface 51 inclined towards the impact blades. Such deflecting blades are placed upstream from the impact blades with respect to the circulation direction Dc. They allow deflecting the gas-particle flow towards the impact blades. Such deflecting blades are particularly useful in cases with high space limitation as they permit to reduce the number of rows of impact blades and the overall pressure drop.

When the supporting element is a casing, the deflecting blade(s) can be positioned inside the casing body 44. They are fixed to the casing, preferably to the upper wall of the casing and/or to the lower wall of the casing.

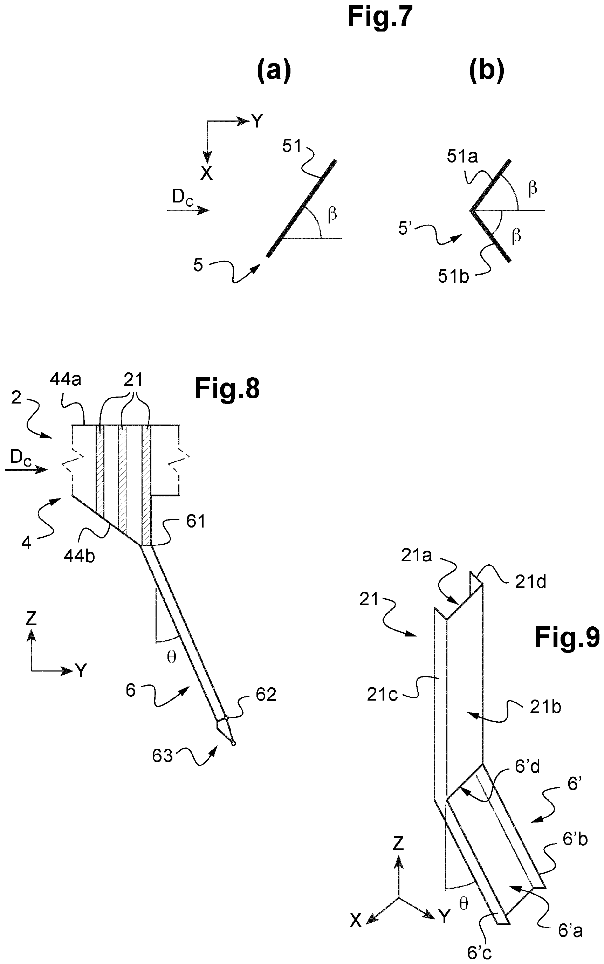

Different designs of deflecting blades are shown in figures 7(a), 7(b). In figure 7a, the deflecting blade 5 has one vertical plane surface 51 forming with a vertical plane containing the circulation direction Dc an angle $\beta$ (beta) of 0° to 45°. This design is more particularly adapted in the near wall region of the particle separation device. In figure 7(b), the deflecting blade 5' has two vertical plane surfaces 51a, 51b forming a V cross section, the concavity of which is directed towards the impact blades 21, each vertical plane surface forming with a vertical plane containing the circulation direction an angle $\beta$ (beta) of 0° to 45°. The V cross section may not be symmetrical and each vertical plane surface 51a, 51b may form an angle beta different.

Optionally, as represented on figures 8 and 9, the particle separation device 2 may comprise a particles collecting element 6, 6' for collecting particles and discharge them. More particularly, this element guides particles into a region of the regenerator enclosure with low gas velocity, away from the inlet opening of the cyclone to reduce the risk of particles re-entrainment. This particles collecting element 6, 6' is placed below the set of impact blades 21 in the vertical direction. It is inclined with respect to the impact blades with respect to a plane perpendicular to the vertical direction in a direction away from the impact blade on their convex side.

Figure 8 shows a particles collecting element 6 connected to the lower end of the lower wall 44b of the casing 4 to collect the particles flowing along this lower wall 44b. In the embodiment represented, a valve 63 is also provided at the lower end 62 of the discharging element such as a flapper valve or a trickle valve. Such valve 63 may stabilize the flow and avoid gas rise along the particles collecting element 6.

Figure 9 shows an embodiment in which one collecting element 6' is connected per impact blade 21, this collecting element 6' is here a concave element of a form similar to the form of impact blade of fig. 3(a), but the concavity of which is directed upwards with a back wall 6a and two lateral walls 6b, 6c. This collecting element 6' is connected by its upper edge 61 to the impact blade 21 such that particles flowing downstream along the impact surface 21a of the impact blade fall on the collecting element 6' and slide along it. More specifically, here the lateral walls 21c and 21d of the impact blade are connected at their lower end to the lateral walls 6'c and 6'b respectively, so that the back walls 21b and 6'a are distant from each other and define a passage 6'd for particles. This embodiment may be provided for impact blades without casing or with casing, preferably without casing. If a casing is provided, this back wall 6'a discharges the collected particles on the lower wall 44b of the casing or into a particles collecting element 6 connected to the lower end of the lower wall 44b of the casing. An angle theta defined between the back wall 6'a and a vertical plane perpendicular to the back wall of the impact blade is superior to the angle of repose of the particles to ensure proper discharge of the particles. Such angle is for example from 0° to 45° and preferably from 10 ° to 30 °.

The invention is not limited to the design of the collecting element 6' represented fig. 9. A simple plate may be used instead of a concave element. In addition, a single concave collecting element may extend below all the impact blades of the last row to recover the particles flowing along each blade of this last row. Other rows of impact blades may also be provided with one or more collecting elements 6', in particular when the at least one supporting element is not a casing. As concave collecting element, an element having a cross section if form of U, C, V or similar can be envisaged.

Examples of figures 1-9 describe a particle separation device 2 having as supporting element a casing 4.

In other embodiments, one or several supporting elements may be provided, which do not form a casing. Such supporting elements may be chosen from a bar, a beam and a plate or any other similar supporting means. These supporting elements are connected to the enclosure 1, in general to its internal wall, to the cyclone 3, or to both. The supporting elements are preferably connected to the upper ends of the impact blades, or to upper and lower ends of the impact blades.

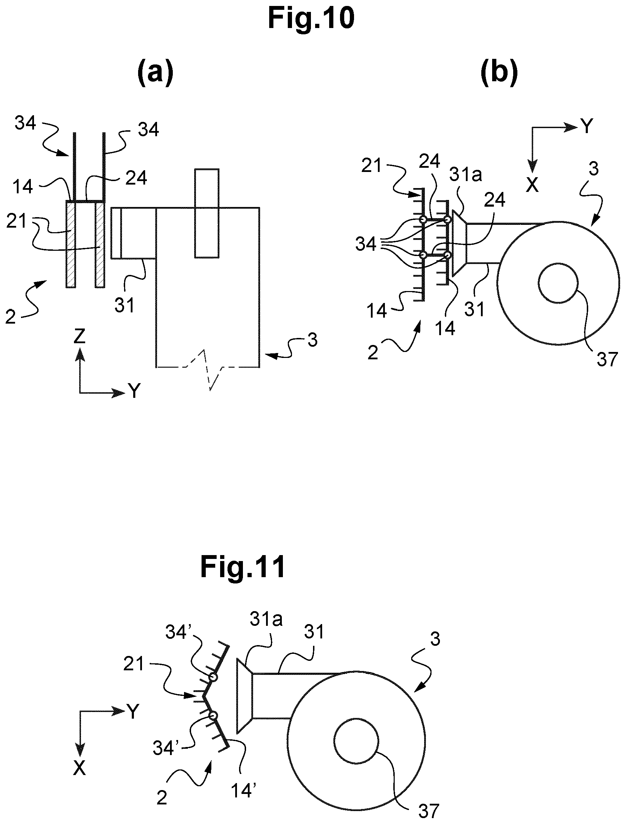

Figures 10(a), (b), show an example of such supporting elements in the case of two rows of impact blades 21 of the form represented figure 3(a) with an alpha angle of 0°. The supporting elements are 2 bars 14 extending horizontally (here in X direction), each one connecting the impact blades of one row together, 2 further bars 24 for connecting the two previous mentioned bars 14 in an horizontal plane, here in the circulation direction Dc, and four bars 34 extending vertically and connected to bars 14 and 24 at their intersection.

Figure 11 shows an example where a single row of impact blades 21, these impact blades being arranged in a V configuration, with the concavity of the V directed towards the inlet opening 31 of the cyclone. A single bar 14' in V extending in a horizontal plane is here used to connect the upper ends of the impact blades. This single bar 14' is connected to the regenerator enclosure by two vertical bars 34'.

In these two embodiments, the inlet opening of the cyclone 31 is provided with a flow guiding element 31a flared in the direction of the particle separation device 2 to ease the entry of the flow exiting the particle separation device into the cyclone 3.

The use of supporting elements in the form of bar, beam, plate allows obtaining a particularly compact and light design of the particle separation device.

The invention is not limited by the number of supporting elements in the form of bar, beam, plate, such number depending on the number of impact blades of the device and of their arrangement. The invention is not limited either by the arrangement of such supporting elements.

The supporting element(s) as well as the impact blades are preferably metallic, for example in stainless steel. Supporting element(s) may be fixed to the impact blades by soldering or screw fastening.

When the supporting elements are intended to be connected to the enclosure 100, in particular at proximity of its top, the supporting elements and impact blades may be cooled with cooling tubes arranges inside their walls.

In most of the embodiments described with respect to the figures, the impact blades are oriented such that the above defined angle alpha is null. The invention is not limited to this particular arrangement of the impact blades, and some or all of the impact blades may have an orientation with an angle alpha from 0 to 45°.

The above described embodiments are applicable to any form and orientation of impact blade. The different features of the described embodiments of the particle separation device can be combined in any combination.

Generally, the particle separation device of the invention can be used for separating particles from a flow of gas arriving on the particle separation device with a velocity for example of 2 to 30m/s, preferably of 5 to 25 m/s, or within any of these limits. The velocity of the gas exiting the particle separation device of the invention and entering the cyclone may then be of 5 to 40 m/s and preferably 15 to 30 m/s, or within any of these limits.

**Example - numerical simulation of separator performance**

Computational Fluid Dynamics (CFD) modelling has been performed on a simplified particle separation device having impact blades as represented figure 3(a) with an alpha angle null. The structure of the particle separation device is as represented in figures 2, 6(a), 6(b) without the flow guiding part 46' (i.e. dh1=dh2=dv1=dv2=0 and delta1=delta2=delta5=delta 6=0. In each row of impact blades, the blades are regularly spaced from each other.

The modeling used the MP-PIC approach (Multiphase Particle-in-Cell Model for dense particle flows - D.M. Snider, Journal of Computational Physics, Volume 170, Issue 2, 1 July 2001, Pages 523-549) to simulate gas/particles flows. The drag correlation for the interaction between gas and particles was computed with the Gidaspow correlation.

Particles properties: density 1450 kg/m3, Mean diameter 70 microns.

The below table 1 presents the operating conditions and the geometry simulated. The notations refer to the notations of figures 6(a), 6(b).

Table 1

| | |
|---|---|
| Temperature (°C) | 650 |
| Pressure (bar absolute) | 2 |
| Gas | Air |
| Cyclone inlet opening width (measured in X direction) (m) | 0.3 |
| Cyclone inlet opening height H (measured in Z direction) (m) | 1 |
| Angle delta 7, delta 8 (°) | 45° |
| dh3 (m) | 0.25 |
| dv3 (m) | 0.7 |
| Superficial gas velocity at cyclone inlet opening (m/s) | 20 |
| Particles loading at cyclone inlet opening ($kg_{SOLIDS}/m^3_{GAS}$) | 2 |
| Blade type | (A) |
| Number of blades per row | 4 to 5 |
| Number of rows | 7 |
| Distance between consecutive rows in the circulation direction (m) | 0.08 |
| Dimension blade D (m) | 0.05 |

(continued)

| Dimension blade W (m) | 0.025 |
|---|---|

The simulation shows that the particles recovered by the blades go into the box under the separator. The separation efficiency is defined with the expression below:

$$Separation\ efficiency = \frac{Particles\ recovered\ with\ the\ blade\ (\frac{kg}{s})}{Particles\ at\ the\ inlet\ of\ the\ separator\ (\frac{kg}{s})}$$

The particle separation efficiency obtained in this case is 30% with a pressure drop of 20 mbar.

**Claims**

1. Particle separation system (1) for separating particles from a gas - particles flow, including a cyclonic separator comprising an inlet opening for the gas charged with particles circulating along a circulation direction perpendicular to a vertical direction when the cyclonic separator is in a use position, and a particle separation device placed in front of or in the inlet opening of the cyclonic separator,
the particle separation device comprising:

   - at least one supporting element (4, 14, 14', 24, 24', 34, 34'),
   - a set of impact blades (21) supported by said at least one supporting element,

   and where,

   - each impact blade extends in the vertical direction,
   - each impact blade defines an impact surface (21a) for particles circulating with the gas in the circulation direction, optionally the impact surface of at least one impact blade is perforated,
   - each impact surface of an impact blade has a concave cross section in a plane perpendicular to the vertical direction, over the whole length of the impact blade along the vertical direction.

2. Particle separation system (1) according to claim 1, comprising at least one row of at least one impact blade, and optionally each row of at least one impact blade is spaced from an adjacent row in the circulation direction.

3. Particle separation system (1) according to claim 2, wherein at least one row presents at least two impact blades, impact blades of a same row are arranged, seen in a top view in the vertical direction, in a configuration chosen from a linear configuration perpendicular to the circulation direction and a V-configuration the concavity of which is directed in the circulation direction.

4. Particle separation system (1) according to claim 2 or 3, wherein the impact blades are spaced and/or are perforated such that the ratio of a free passage surface and a cyclonic opening surface is set from 0.2 to 5, preferably from 0.5 to 2, where the free passage surface is the surface measured in a plane perpendicular to the circulation direction through which the particles gas flow can flow between and/or through one row of impact blades and the cyclonic opening surface is the surface of the inlet opening of the cyclonic separator measured in a plane perpendicular to the circulation direction.

5. Particle separation system (1) according to any one of claims 1 to 4, wherein the projected surfaces, obtained by projection of the impact blades in the direction of the circulation direction on a vertical plane perpendicular to the circulation direction, cover at least 80% of the surface of the inlet opening of the cyclonic separator (3) and optionally cover entirely the surface of the inlet opening of the cyclonic separator (3).

6. Particle separation system (1) according to any one of claims 1 to 5, wherein the concave cross section of each impact surface of an impact blade is chosen among a U cross section, a flared U cross section, a curved cross section a V cross section.

7. Particle separation system (1) according to any one of claims 1 to 6, wherein, at least one impact blade presents on opposite ends of its convex side two deflecting walls forming with a vertical plane containing the circulation direction an angle beta from 0° to 45° away from each other.

8. Particle separation system (1) according to any one of claims 1 to 7, wherein each impact blade has a width W and a depth D measured perpendicularly to the vertical direction in perpendicular directions, and the ratio D/W is from 0.02 to 2, preferably from 0.05 to 0.5.

9. Particle separation system (1) according to any one of claims 1 to 8, further comprising, upstream from the particle separation device (2) with respect to the circulation direction, at least one deflecting blade (5) defining at least one vertical surface inclined towards the impact blades of the particle separation device (2) with respect to a vertical plane containing the circulation direction, optionally chosen among a blade having one vertical plane surface forming with a vertical plane containing the circulation direction an angle of 0° to 45°, a blade having two vertical plane surfaces arranged in a V-configuration, the concavity of which is directed towards the impact blades, each vertical plane surface forming with a vertical plane containing the circulation direction an angle of 0° to 45°.

10. Particle separation system (1) according to any one of claims 1 to 9, further comprising at least one particles collecting element (6) placed below the set of impact blades of the particle separation device (2) in the vertical direction to collect the particles falling by gravity along the impact surface of the impact blades, said particles collecting element (6) being inclined with respect to a plane perpendicular to the vertical direction in a direction away from the impact blades in the circulation direction, and optionally a lower end of said particles collecting element (6) is provided with a valve.

11. Particle separation system (1) according to any one of claims 1 to 10, wherein said at least one supporting element is chosen among a bar, a beam, a plate and a casing defining a housing for the set of impact blades and optionally the at least one deflecting blade, said casing having an entry and an exit on opposite sides in the circulation direction.

12. Particle separation system (1) according to any one of claims 1 to 11, wherein the at least one supporting element is a casing (4, 4') defining a housing for the set of impact blades and optionally the at least one deflecting blade (5), said casing having an entry (41, 41') and an exit (42, 42') on opposite sides in the circulation direction, and said casing presents one or several of the following features :

   - a constant cross section in a plane perpendicular to the circulation direction,
   - a flow guiding part (46') connected to its entry, said flow guiding part widening in a direction away from the casing,
   - below the set of impact blades, a lower wall (44b) inclined with respect to a plane perpendicular to the vertical direction in a direction away from the set of impact blades, from the entry of the casing towards its exit.

13. Enclosure (100) for a circulating fluidized bed unit, said enclosure extending vertically and comprising on its inside a particle separation system (1) according to any one of claims 1 to 12.

14. Enclosure (100) according to claim 13, wherein the particle separation device (2) is fixed directly to the cyclonic separator.

15. Enclosure (100) according to claim 13 or 14, wherein the particle separation device (2) is fixed directly to internal walls of the enclosure.

Fig.1

Fig.2

# Fig.3

(a)

(b)

(c)

(d)

(e)

(f)

(g)

# Fig.4

# Fig.5

## (a)          (b)          (c)

# Fig.6

(a)

(b)

# Fig.7

**(a)**          **(b)**

# Fig.8

# Fig.9

# Fig.10

## (a)

## (b)

# Fig.11

Europäisches
Patentamt

European
Patent Office

Office européen
des brevets

# EUROPEAN SEARCH REPORT

Application Number

EP 20 30 5805

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 9 789 429 B2 (SCHOOK ROBERT [NL]; SULZER CHEMTECH AG [CH]) 17 October 2017 (2017-10-17) * figures 1-3 * | 1-15 | INV. B01D45/08 B01D45/12 B04C5/04 |
| A | JP S61 187259 U (N.N.) 21 November 1986 (1986-11-21) * figures 1-2 * | 1-15 | |
| A | JP H04 114729 A (AGENCY IND SCIENCE TECHN) 15 April 1992 (1992-04-15) * figures 1-3 * | 1-15 | |
| A | US 4 992 085 A (BELIN FELIX [US] ET AL) 12 February 1991 (1991-02-12) * figures 1-7 * | 1-15 | |

TECHNICAL FIELDS
SEARCHED (IPC)

B01D
B04C

The present search report has been drawn up for all claims

| Place of search | Date of completion of the search | Examiner |
|---|---|---|
| Munich | 1 December 2020 | Baumgartner, Robin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 939 685 A1**

## ANNEX TO THE EUROPEAN SEARCH REPORT
## ON EUROPEAN PATENT APPLICATION NO.

EP 20 30 5805

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2020

| Patent document cited in search report | | | Publication date | Patent family member(s) | | | Publication date |
|---|---|---|---|---|---|---|---|
| US 9789429 | | B2 | 17-10-2017 | BR | 112012005375 | A2 | 25-07-2017 |
| | | | | CA | 2772828 | A1 | 17-03-2011 |
| | | | | EP | 2475447 | A2 | 18-07-2012 |
| | | | | US | 2013139689 | A1 | 06-06-2013 |
| | | | | WO | 2011031154 | A2 | 17-03-2011 |
| JP S61187259 | | U | 21-11-1986 | NONE | | | |
| JP H04114729 | | A | 15-04-1992 | JP | H0618632 | B2 | 16-03-1994 |
| | | | | JP | H04114729 | A | 15-04-1992 |
| US 4992085 | | A | 12-02-1991 | AT | 80809 | T | 15-10-1992 |
| | | | | CA | 2030995 | A1 | 09-07-1991 |
| | | | | CN | 1053486 | A | 31-07-1991 |
| | | | | CS | 9100020 | A2 | 13-08-1991 |
| | | | | DE | 69000336 | T2 | 11-02-1993 |
| | | | | EP | 0437028 | A1 | 17-07-1991 |
| | | | | ES | 2035711 | T3 | 16-04-1993 |
| | | | | HU | 209373 | B | 30-05-1994 |
| | | | | JP | 2606757 | B2 | 07-05-1997 |
| | | | | JP | H04214104 | A | 05-08-1992 |
| | | | | KR | 910014655 | A | 31-08-1991 |
| | | | | PL | 288628 | A1 | 23-09-1991 |
| | | | | RO | 110173 | B1 | 30-10-1995 |
| | | | | SK | 279577 | B6 | 11-01-1999 |
| | | | | TR | 25454 | A | 01-05-1993 |
| | | | | US | 4992085 | A | 12-02-1991 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D.M. SNIDER.** Multiphase Particle-in-Cell Model for dense particle flows. *Journal of Computational Physics,* 01 July 2001, vol. 170 (2), 523-549